Europäisches Patentamt

European Patent Office

Office européen des brevets

(19)

(11) **EP 1 123 740 B1**

(12) **EUROPEAN PATENT SPECIFICATION**

(45) Date of publication and mention
of the grant of the patent:
**11.09.2002 Bulletin 2002/37**

(51) Int Cl.[7]: **B03B 5/60**, B02C 18/26,
B01D 37/00

(21) Application number: **99970624.5**

(22) Date of filing: **01.10.1999**

(86) International application number:
**PCT/ES99/00312**

(87) International publication number:
**WO 00/023191 (27.04.2000 Gazette 2000/17)**

(54) **PROCESS FOR GRINDING NOBLE METALS IN LIQUID MEDIUM**

VERFAHREN ZUM PULVERISIEREN VON EDELMETALLEN IN FLÜSSIGEM MEDIUM

PROCEDE DE PULVERISATION DE METAUX PRECIEUX EN MILIEU LIQUIDE

(84) Designated Contracting States:
**AT BE CH CY DE DK ES FI FR GB GR IE IT LI LU
MC NL PT SE**

(30) Priority: **19.10.1998 ES 9802176
16.03.1999 ES 9900538**

(43) Date of publication of application:
**16.08.2001 Bulletin 2001/33**

(73) Proprietor: **Feyje, S.L.**
**26006 Logrono (ES)**

(72) Inventors:
• **ALONSO VAREA, José Fernando-Feyje, S.L.**
**E-26006 Logrono (ES)**
• **BENITO DE VALLE, Jesús Vicario-Feyje, S.L.**
**E-26006 Logrono (ES)**

(74) Representative: **Carpintero Lopez, Francisco**
**HERRERO & ASOCIADOS, S.L.**
**Alcalá, 35**
**28014 Madrid (ES)**

(56) References cited:
**US-A- 4 960 461        US-A- 4 991 824
US-A- 5 295 665**

# EP 1 123 740 B1

**Description**

## TECHNICAL FIELD

The present invention is of application in the industry of transformation of precious metals and may be later applied in several industries, such as cosmetic, paint and food. The invention specifically relates to a process for obtaining fine particles of precious metals which comprises transforming leafs, laminas and wafers of precious metals, by fragmenting in a liquid medium, into a presentation as fine particles which can be incorporated to different products, such as perfumes, essences, drinks, oils, paint and the like.

## BACKGROUND OF THE INVENTION

Use of precious metals for therapeutic applications is known since antiquity. The ancient Egyptian civilisation employed gold as an element with important healing and antiseptic powers and in order to stabilise negative energies of people.

Likewise, certain alternative medicines, such as Ayurvedic Medicine and even some Tibetan doctors use derivatives of precious metals in their traditional medicine craft.

However, the existence of perfumes, essences, drinks or the like is not known which include among their components fine particles of precious metals.

Several processes are known for transforming precious metals into powder based on chemical processes, e.g. US-A-52 45 665, in which the powder obtained has a dull colour, lacking gloss, which hurts its appearance; in the case of gold, two types of gold dust can be found, one a dark brown colour, with no gloss, and another one shiny but consisting of a very fine and heavy powder.

In general, traditional processes for transforming precious metal into powder result in a pulverulent appearance, with a particle size and weight which immediately decants.

For several practical reasons, it would be convenient to obtain precious metals in the form of small size particles which decant slowly and maintain their aesthetic, healing and appearance properties. Such particles could be added to several products, such as perfumes, essences, drinks, oils, paint, etc. in order to obtain products which are now not available and which would be well accepted by consumers.

The invention discloses a solution for the present need which comprises development of a process allowing to obtain fine particles of precious metals which decant very slowly, remain for a relatively long period in suspension in a liquid medium and which give the appearance of a large amount of noble metal in said liquid medium, while maintaining the aesthetic and/or healing properties of these metals.

## DESCRIPTION OF THE INVENTION

The process for fragmenting precious metals in a liquid medium disclosed in this invention, hereon the process of the invention, comprises:

a) introduction of the precious metals, in the form of laminas, leafs or wafers in a container provided with fragmenting means;
b) addition to said container with the precious metal of a liquid medium of a density within 0.61 g/ml and 1.50 g/ml at room temperature;
c) fragmenting of the precious metal in the container, in the presence of the liquid medium, until the former is transformed into a product consisting of small-sized precious metal particles;
d) sedimentation of said particles until they are deposited on the bottom of the container;
e) extraction of the liquid medium after allowing to rest the mixture of the small sized precious metal particles and the liquid medium; and
f) removal of the precious metal transformed into fine particles with an average size between 0.00020 mm$^2$ and 0.6 mm$^2$, completely dry.

The process of the invention allows to transform precious metals into small, fine particles without affecting their particular properties, including their gloss, and so that they may be added as a complementary component to several products, such as perfumes, essences, drinks (cavas, liquors), oils, paint, etc.

According to an alternative embodiment of the process of the invention, the fragmentation is performed in the liquid medium which is to contain the precious metal in the form of fine particles, in which case aforementioned stages d)-f) are not performed.

The precious metal to be transformed into fine particles, of various sizes, is preferably gold or silver and in

2

the form of laminas, leafs or wafers, preferably as leafs. According to a particular application of this invention, the precious metal is gold, in the form of gold leaf, from 14 to 24 carats, with an average thickness between 0.051 and 0.103 mm, a weight per unit surface between 10 and 20 g/dm$^2$, a melting point of 1,062.5ºC and a boiling point of 2,9650ºC.

As regards the container provided with means of fragmentation, several trials were performed using different fragmenting methods, in order to find the best suited one for reducing to practice the process of the invention. After said trials, it was decided that the best suited fragmenting methods consist of a set of blades driven by a central rotary shaft capable of moving upwards and downwards, coupled to a driving motor which supplies the required power with speed regulation without scaling, submerged in a semi-hermetic leak-tight vat, and optionally provided with external refrigeration or heating devices up to 100ºC.

In a specific realisation it was observed that, for the purposes of the present invention, the best suited fragmenting means consist of a helical blade set constructed from stainless steel of an 18/10 chrome-nickel alloy driven by a central rotary shaft which may move upwards and downwards, coupled to a drive motor which supplies 0.6 kW, with speed regulation without scaling from 100 to 12,000 r.p.m., submerged in a leak-tight, semi hermetic vat of stainless steel of an 18/10 chrome-nickel alloy which may be externally cooled or heated up to 100ºC.

According to the invention, the fragmentation of precious metals is performed in a liquid medium with a density between 0.61 g/ml and 1.50 g/ml at room temperature, that is, between 15 and 30ºC. When the precious metal to be fragmented is gold and the medium employed has a density between 0.98 g/ml and 1.02 g/ml certain problems arise due to the gold floating, which extends the duration of the process of the invention, as well as part of the gold adhering to the walls of the container not in contact with the liquid medium, as well as to the top part of the fragmenter; however, once these problems are solved fragmenting is performed perfectly.

The liquid medium which may be used for the process of the invention may contain one or more organic and/or inorganic compounds, as long as the medium density is between 0.61 and 1.50 g/ml. As an example, said medium may consist of alcohols, such as ethanol; hydrocarbons, such as pentane, hexane, cyclohexane; organic solvents, such as acetone, dichloromethane, chloroform; mixtures of organic compounds, such as chloroform-hexane, dichloromethane-acetone, acetone-chloroform; mixtures of organic compounds with inorganic salts, such as acetone-cobalt chloride; aqueous-organic mixtures, such as ethanol-water, acetone-water; ternary mixtures, such as acetone-water-cobalt chloride. The liquid medium may also consist of an aqueous solution or suspension of an inorganic salt, such as cobalt chloride, sodium chloride or a saccharide, such as glucose-water.

In a particular realisation of this invention the liquid medium in which the fragmenting is performed is an alcoholic or hydroalcoholic medium. The alcohol may be a low molecular mass alcohol, of the type used in elaboration of spirits or perfumes, essences, colognes, etc. In a particular realisation, said alcohol is high purity ethanol, such as 96º. The water used in the hydroalcoholic solution is preferably distilled water.

The concentration of alcohol in the hydroalcoholic medium can vary considerably, preferably equal to or greater than 4% by volume. In a particular realisation of the invention, the hydroalcoholic medium consists of distilled water and ethanol in a concentration equal to or greater than 4% ethanol by volume.

Numerous tests performed with only water as a liquid medium for fragmenting and extraction of the fragmented material under several fragmenting conditions (blade rotation speed between 100 r.p.m. and over 10,000 r.p.m.; temperatures between 0ºC and 60ºC) revealed that the precious metal adheres to the blade edge, with a difficult later extraction for recovery, which makes water alone difficult and practically impossible as the liquid medium in fragmenting and extracting the fragmented precious metal.

The internal molecular cohesion force of the water is much greater than the adhesion force between fragmented precious metal particles and water molecules [the cohesion coefficient between water molecules is 0.0741 N/m at 20ºC]. Additionally, the force of cohesion between water molecules is increased by their polarity. However, if a different liquid medium is employed, such as an alcoholic or hydroalcoholic for fragmenting, the cohesion force between the precious metal fragmented particles and the molecules of the alcoholic or hydroalcoholic medium is greater than that between the molecules of the alcoholic or hydroalcoholic medium, causing an immediate carry-over of the precious metal particles [the cohesion coefficient between molecules of a hydroalcoholic medium of 4% ethanol by volume is 0.002 N/m at 20ºC]. The lower molecular cohesion simplifies extraction of the fragment. Therefore, water alone as a liquid medium is not recommended for fragmenting and extracting the fragmented precious metal.

Fragmenting of the precious metal contained in the container, in presence of the liquid medium, is continued until the precious metal is transformed into small fine particles of precious metal.

The buoyancy of the particles which result from the fragmenting, and therefore their size, is closely related on one hand, to the medium in which they are later to be suspended, and on another hand to the thickness, or rather weight per unit surface of the particle obtained.

Several tests conducted with different aqueous mediums in fragmenting revealed that their composition has little or no effect on the desired size of particle being obtained, as the size of the fragmented precious metal particles depends essentially on the speed of rotation and vertical displacement speed of the blades of the fragmenting means and on the duration of the fragmenting process. When the liquid medium is a hydroalcoholic medium, it was confirmed that its composition had practically no influence in obtaining the desired particle size, as long as mixtures are employed with a minimum concentration of 4% alcohol by volume.

In general, particle are obtained of a more uniform but greater average size when working at low rotation speeds (below 1,000 r.p.m.), while when working at higher rotation speeds (1,000 r.p.m. or greater) particles are obtained which are smaller but more varied in size. However, in both cases the dispersion of the average size can be reduced by a longer duration of the fragmenting process.

The average particle sizes obtained which maintained slightly better suspension in the liquid medium were those of particles obtained from a precious metal presentation of low thickness, that is, with a low weight per unit area, as this facilitates suspension of the material in the medium, with no great differences found as relates to sedimentation of the particles obtained after fragmenting in the various liquid mediums tested.

Extraction of the liquid medium employed in the fragmenting is generally performed after allowing the mixture of small precious metal particles and liquid medium to rest for a suitable period of time. Extraction of the liquid medium may be performed by conventional methods, such as by removing part of said liquid medium by for example decanting, followed by evaporation of the rest of the liquid medium, optionally aided by a heat source, or simply by filtering.

The small precious metal particles obtained by this invention may be used in the elaboration of several products, such as those based on alcoholic or hydroalcoholic mediums which contain said small precious metal particles suspended, as perfumes, essences, cologne, cava, liquor, etc. Additionally, these small precious metal particles obtained by the invention may be used in foodstuff, such as by being added to edible oils providing oils with precious metal particles in suspension, etc. Said particles can also be employed in paints, since a small amount of gold allow to obtain high quality coatings with an appearance similar to that of gold.

For one of the specific applications of this invention, numerous tests were performed using alcoholic and hydroalcoholic mediums of different densities [between 0.84 and 1.00 g/ml] in order to obtain several models to simulate the conditions of perfumes, liquors, cava, etc. located at extremes of alcohol concentration [lower in cava and higher in perfumes].

Although one could consider that a density of 0.84 g/ml approximately is representative of an average cava, the fact is that the typical density of such a drink is 0.901-0.902 g/ml approximately, due to the balance between ethanol content (11% minimum) which reduces the density and the presence of residual organic acids, salts, phenolic compounds, antocyanic compounds, tannins and reducing sugars, aside from other irrelevant elements, which substantially increase its density. In addition, the dissolved carbon dioxide content of cava must be considered, as it can become an important aiding factor for suspension.

Similarly, the high alcohol content of perfumes would produce products with relatively low densities, such as 0.840 g/ml, while in fact the presence of fixing and aroma providing compounds usually present slightly increases the density of perfumes.

In view of the above circumstances and characteristics, it is found that fragmented precious metal particles best suited for suspension in a liquid medium with a density between 0.61 and 1.50 g/ml, for example in an alcoholic or hydroalcoholic medium, must have a particle surface which allows to balance the buoyancy force exerted on its surface by the alcoholic or hydroalcoholic medium with the gravitational attraction which the particle experiences. In general, said particles must have a surface area between 0.00020 mm$^2$ and 0.6 mm$^2$ and preferably a laminar structure. Particles with a very flat surface (flatness) and a minimal weight per unit surface will aid to increase the time of suspension in the liquid medium in which they are suspended.

The precious metal particles suspended in the liquid medium, preferably in groups of even sizes, will slowly fall to the bottom of the container holding the suspension, with a small initial acceleration which after a few seconds, typically 5 seconds, turns into a low uniform speed, equal to or lower than 0.5 cm/s. The rate of fall of the particles is representative of their time of suspension, that is, of the time taken by these particles to sediment at the bottom of the container which holds this suspension [the faster the fall velocity, the shorter the suspension time, and therefore a quicker sedimentation].

The long permanence in suspension of the particles of precious metals obtained by the process object of this invention constitutes and additional characteristic of the particles and a substantial difference with other existing pulverulent forms of precious metals, such as gold dust, which when suspended in an alcoholic or hydroalcoholic solution sediment almost immediately, that is, their permanence in suspension is very brief.

On purely aesthetic grounds, a group of particles with greater surface area is more attractive, although this limits their number per unit volume if a fixed weight of precious metal is determined per unit product, while presenting the advantage of a lower agglomeration during the fall of the particles, which can increase their time of permanence in suspension, so that sedimentation takes longer.

Precious metal particles in suspension in a liquid medium may sediment in two ways:

a) by particles falling independently from each other. With a very short initial period of constant acceleration, on the order of a few seconds, and a later fall at a terminal constant speed; or
b) by falling in agglomeration, that is, by particles grouped with each other, with growing changes occurring during the fall depending on the number of groupings or agglomerations formed and on the particle size.

The initial process followed by the fragmented precious metal particles provided by this invention is similar to that of section a) above.

When the concentration of particles in suspension is low, the particles will sediment as if alone; however, its falling speed will increase with its size as a result of the encounter and adhesion of other particles.

As is known, particles which are suspended in a liquid at rest are subject to a force due to gravity and to a resistance force due to friction with the liquid, which is the resultant of the forces of viscosity and inertia.

When the particle is free to move starting from a liquid medium at rest, such as cava, perfume, essence, edible oil, paint, etc., it will accelerate more or less depending on its weight, its contact surface with the liquid medium, the latter's density and viscosity and forces of inertia,, until reaching a constant speed which does not increase (terminal velocity), after a time which is nearly always irrelevant in relation to the time taken for sedimentation. This speed can be found by Newton's formula:

$$V^{2-n} = \frac{4d^{1+n} \; g(Ps-Pe)}{3 \; C \; Pe}$$

where

V is the final speed in cm/s;
d is the particle diameter in cm;
g is 981 cm/s$^2$
Ps and Pe are the volume weights of the particle and the fluid respectively; and
C is the drag coefficient, related to the Reynolds number, $C = aRe^{-n}$, where a and n are two coefficients.

Table 1 shows the values of a, n and C as a function of the Reynolds number.

Table 1

| Values of a, n and C as a function of Re | | | |
|---|---|---|---|
| **Re** | **A** | **n** | **C** |
| $10^{-4} < Re < 10^{-1}$ | 24 | 1 | 24/Re |
| $1 < Re < 10^1$ | 18.5 | 0.6 | $1.85Re^{0,1}$ |
| $10^1 < Re < 4.10^{-5}$ | 0.44 | 0 | 0.44 |

The invention also provides a product consists of a suspension of powdered precious metal in pulverulent form which comprises particles of said precious metal with a particle surface area between 0.00020 mm$^2$ and 0.6 mm$^2$, which can be obtained by the aforementioned process, suspended in a liquid medium with a density between 0.61 and 1.50 g/ml.

In a particular realisation of this invention, the precious metal is chosen among gold, silver and their mixtures, and said liquid medium is an alcoholic or hydroalcoholic solution with at least 4% alcohol by volume. The alcohol may be a low molecular weight alcohol, of the type used for alcoholic spirits or for perfumes, essences, colognes, etc. in a particular realisation, said hydroalcoholic solution shall comprise distilled water and ethanol in a concentration of at least 4% ethanol by volume. In a particular realisation, said alcoholic or hydroalcoholic solution is chosen among perfumes, essences, cologne, cava, champagne, liquors and the like.

The precious metal particles suspended in the liquid medium, preferably in group of sizes as uniform as possible, will slowly fall to the bottom of the container holding the suspension, with a small initial acceleration which after a few seconds, typically 5 seconds, turns into a low uniform speed, equal to or lower than 0.5 cm/s. The rate of fall of the particles is representative of their long time of suspension and constitutes one of the characteristics of the final product.

Additionally, it should be remarked that very small amounts, by weight, of the precious metal in the form of fine particles obtained by the process of the invention, once incorporated to the liquid medium and once decanted or precipitated to the bottom of the container which holds the suspension of fine particles of precious metal in said liquid medium, acquire an proportionally very large volume compared to the amount, by weight, of precious metal provided, creating the impression that there is an extraordinarily large amount of precious metal in the liquid medium.

The small precious metal particles obtained by the process of the invention are useful in many industries, among which are the cosmetics industry [for example, in creation of perfumes, essences, colognes, etc.], in the food industry [for example, in creation of cavas, champagnes, liquors, oils, etc.], in the paints and coatings industry [for example, in creation of paints, etc.]. Therefore, the invention provides a product, such as a perfume, an essence, a cologne, a cava, a champagne, a liquor, an edible oil, a paint, etc. which comprises said precious metal particles in suspension.

Said product can be easily obtained by adding to the corresponding liquid medium a suitable amount of precious metal in the form of fine particles with a surface between 0.00020 mm- and 0.6 mm$^2$. Alternatively, said product may be obtained by fragmenting the precious metal in the fragmenter container directly in the liquid medium.

**EXAMPLE 1**

Gold leaf has been fragmented in different liquid mediums, with different densities at room temperature [see Table 2]. For this purpose, the gold leaf flakes were introduced in a container provided with fragmenting means comprising a helical blade set constructed from stainless steel of an 18/10 chrome-nickel alloy driven by a central rotary shaft which may move upwards and downwards, coupled to a drive motor which supplies 0.6 kW, with speed regulation without scaling from 100 to 12,000 r.p.m., submerged in a leak-tight, semi hermetic vat of stainless steel of an 18/10 chrome-nickel alloy which may be externally cooled or heated up to 100ºC. Afterwards, the liquid medium to be tested was added in the amount shown in Table 2, to the container preciously loaded with the gold leaf and provided with fragmenting means.

The results obtained are shown in Table 2, where it can be seen that neither the number of gold leaf flakes nor the volume of solvent apparently affected the fragmenting.

Table 2

| Fragmenting tests with different liquid mediums | | | | |
|---|---|---|---|---|
| Liquid medium | Density (g/ml) | Volume of liquid medium (ml) | Number of gold leaf flakes fragmented | Results |
| n-Pentane | 0.626 | 100 | 50 | (1) |
| Hexane | 0.659 | 100 | 125 | (1) |
| Cyclohexane | 0.779 | 100 | 10 | (1) |
| Acetone | 0.780 | 100 | 18 | (1) |
| Ethanol 97% | 0.800 | 50 | 90 | (1) |
| Acetone/ cobalt chloride | 0.821 | 100 | 10 | (1) |
| R-27 + solvents | 0.900 | 110 | 236 | (1) |
| Acetone/water | 0.915 | 100 | 25 | (1) |
| Acetone/water | 0.980 | 100 | 5 | (1) |
| Ethanol 4%/ water | 0.980 | 100 | 10 | (2) |
| Chloroform/hexane | 0.990 | 150 | 40 | (3) |
| Tap water | 0.993 | 100 | 5 | (2) |
| Acetone/water/ Cobalt chloride | 1.000 | 100 | 5 | (4) |
| Dichloromethane/ Acetone | 1.000 | 100 | 25 | (5) |
| Deionised water | 1.000 | 100 | 10 | (2) |
| Deionised water / Sodium chloride | 1.010 | 150 | 35 | (2) |

Table 2   (continued)

| Fragmenting tests with different liquid mediums | | | | |
|---|---|---|---|---|
| Liquid medium | Density (g/ml) | Volume of liquid medium (ml) | Number of gold leaf flakes fragmented | Results |
| Deionised water / Cobalt chloride | 1.024 | 100 | 10 | (3) |
| Deionised water / Glucose | 1.030 | 150 | 10 | (5) |
| Acetone/ Chloroform | 1.100 | 150 | 45 | (1) |
| Dichloromethane/ Acetone | 1.200 | 150 | 15 | (5) |
| Dichloromethane | 1.325 | 100 | 25 | (5) |
| Chloroform | 1.492 | 100 | 35 | (1) |
| Mineral water | | 100 | 5 | 2 |
| Mineral water + acetone | | 100 + 16 | 5 | (6) |

Meaning of the codes employed in the results column:

(1): Fragmenting performed without any problems.

(2): Gold reaches the top of the solution, difficulting fragmenting and adhering to the walls.

(3): Fragmenting performed without any problems, although the gold floats somewhat.

(4): Gold reaches the top of the solution, difficulting fragmenting but does not adhere to the walls.

(5): Gold adheres to the wall somewhat but without difficulting fragmenting.

(6): 4 ml acetone are added to the mineral water solution (from the previous test) with the same result, until 16 ml are added, when fragmenting is performed without difficulty.

**Claims**

1.  Process for fragmenting precious metals in a liquid medium, comprising:

    a) introduction of the precious metals, in the form of laminas, leafs or wafers in a container provided with fragmenting means;
    b) addition to said container with the precious metal of a liquid medium of a density between 0.61 g/ml and 1.50 g/ml at room temperature;
    c) fragmenting of the precious metal in the container, in the presence of the liquid medium, until the former is transformed into a product consisting of small-sized precious metal particles;
    d) sedimentation of said particles until they are deposited on the bottom of the container;
    e) extraction of the liquid medium after allowing to rest the mixture of the small sized precious metal particles and the liquid medium; and
    f) removal of the precious metal transformed into fine particles with an average size between 0.00020 mm$^2$ and 0.6 mm$^2$, completely dry.

2.  Process as claimed in claim 1, wherein said noble metal is selected among gold, silver and their mixtures.

3.  Process as claimed in claim 2, wherein said precious metal is gold in the form of gold leaf, between 14 and 24 carats, with an average thickness between 0.051 and 0.103 mm, and a weight per unit surface area between 10 and 20 g/dm$^2$.

4.  Process as claimed in claim 1, wherein said fragmenting means consist of a set of blades driven by a central rotary shaft capable of moving upwards and downwards, coupled to a driving motor which supplies the required power with speed regulation without scaling, submerged in a semi-hermetic leak-tight vat, and optionally provided with external refrigeration or heating means.

5.  Process as claimed in claim 4, wherein said fragmenting means consist of a helical blade set constructed from stainless steel of an 18/10 chrome-nickel alloy driven by a central rotary shaft which may move upwards and downwards, coupled to a drive motor which supplies 0.6 kW, with speed regulation without scaling from 100 to 12,000 r.p.m., submerged in a leak-tight, semi hermetic vat of stainless steel of an 18/10 chrome-nickel alloy which may be externally cooled or heated up to 100ºC.

6. Process as claimed in claim 1, wherein said liquid medium is selected among the group formed by alcohols; hydrocarbons; organic solvents; mixtures of hydrocarbons and organic solvents; mixtures of organic solvents with inorganic salts; aqueous-organic mixtures; ternary mixtures consisting of an organic solvent, water and an inorganic salt; aqueous solutions or suspensions of an inorganic salt; and aqueous solutions or suspensions of saccharides, with a density between 0.61 g/ml and 1.50 g/ml at room temperature.

7. Process as claimed in claim 1, wherein said liquid medium consists of a hydroalcoholic medium comprising water and a low molecular mass alcohol, in a concentration above 4% alcohol by volume.

8. Process as claimed in claim 7, wherein the low molecular mass alcohol is ethanol.

9. Process as claimed in claim 1, wherein in stage e), the extraction of the liquid medium is performed by removing part of said liquid medium by decanting, followed by an evaporation of the remaining liquid medium, optionally with the aid of a heat source.

10. Process as claimed in claim 1, wherein in stage e), the extraction of the liquid medium is performed by filtration.

11. A product comprising a suspension of a precious metal in the form of small sized particles, **characterised in that** it comprises precious metals particles with a particle surface between 0.00020 mm$^2$ and 0.6 mm$^2$, which are obtained by the process of claim 1, suspended in a liquid medium with a density between 0.61 g/ml and 1.50 g/ml at room temperature.

12. Product as claimed in claim 11, wherein said precious metals is chosen between gold and silver.

13. Product as claimed in claim 11, wherein said liquid medium is selected among the group formed by alcohols; hydrocarbons; organic solvents; mixtures of hydrocarbons and organic solvents; mixtures of organic solvents with inorganic salts; aqueous-organic mixtures; ternary mixtures consisting of an organic solvent, water and an inorganic salt; aqueous solutions or suspensions of an inorganic salt; and aqueous solutions or suspensions of saccharides, with a density between 0.61 g/ml and 1.50 g/ml at room temperature.

14. Product as claimed in claim 13, wherein said liquid medium consists of a hydroalcoholic medium comprising water and an alcohol of a low molecular mass in a concentration above 4% alcohol by volume.

15. Product as claimed in claim 14, wherein said low molecular mass alcohol is ethanol.

16. Product as claimed in claim 11, wherein said liquid medium is selected among a perfume, an essence, a cologne, a cava, a champagne, a liquor, an edible oil and a paint.

17. Product as claimed in claim 11, wherein said small precious metals particles suspended in the liquid medium are deposited on the bottom of the container holding said suspension at a speed equal to or below 0.5 cm/s.

18. Product as claimed in claim 11, consisting of a perfume, an essence, a cologne, a cava, a champagne, a liquor, an edible oil or a paint comprising said small precious metals particles in suspension.

**Patentansprüche**

1. Verfahren zum Zerkleinerung von Edelmetallen in einem flüssigen Mittel, welches umfasst:

   a) die Einführung des Edelmetalls in Form von Lamellen, Plättchen oder Oblaten in einen mit Zerkleinerungsvorrichtungen ausgestatteten Behälter;
   b) die Zugabe eines flüssigen Mittels mit einer Dichte zwischen 0,61 g/ml und 1,50 g/ml bei Raumtemperatur zu dem im Behälter enthaltenen Edelmetall;

c) die Zerkleinerung des im Behälter befindlichen Edelmetalls in Anwesenheit des flüssigen Mittels bis zur Verwandlung des Edelmetalls in ein aus Edelmetallpartikeln geringer Grösse bestehendes Produkt;

d) die Absetzung dieser Partikel bis zu ihrer vollständigen Ablagerung auf dem Behälterboden;

e) den Abzug des flüssigen Mittels nach dem Ruhen der aus den kleinen Partikeln des Edelmetalls und dem flüssigen Mittel bestehenden Mischung und

f) die Entnahme des in feine Partikel mit einer Grösse zwischen 0,00020 mm$^2$ und 0,6 mm$^2$ verwandelten und völlig trockenen Edelmetalls.

2. Verfahren nach Anspruch 1, bei welchem das Edelmetall unter Gold, Silber und deren Mischungen gewählt wird.

3. Verfahren nach Anspruch 2, bei welchem das Edelmetall Goldplättchen von 14 bis 24 Karat sind, die eine durchschnittliche Stärke von 0,051 bis 0,103 mm und ein Gewicht zwischen 10 und 20 g/dm$^2$ pro Flächeneinheit aufweisen.

4. Verfahren nach Anspruch 1, bei welchem die Zerkleinerungsvorrichtungen in einem Messersystem bestehen, dessen Messer von einer mittleren Drehachse in vertikal aufsteigender und absteigender Richtung bewegt werden, mit einem Antriebsmotor verbunden sind, der die erforderliche Leistung zur Verfügung stellt und in seiner Geschwindigkeit stufenlos geregelt werden kann und eingetaucht in einer dichten und halbdurchlässigen Wanne liegen, die wahlweise mit Vorrichtungen für eine Kühlung oder äussere Aufheizung ausgestattet sind.

5. Verfahren nach Anspruch 4, bei welchem diese Zerkleinerungsvorrichtungen aus einem System schraubenförmiger Messer aus rostfreiem Chrom-Nickel-Legierungsstahl von 18/10, die von einer mittleren Drehachse in vertikal aufsteigender und absteigender Richtung bewegt werden und mit einem Antriebsmotor verbunden sind, der eine Leistung von 0,6 kW hat, in seiner Geschwindigkeit stufenlos von 100 bis 12.000 UpM geregelt werden kann, bei dem die Messer eingetaucht in einer dichten und halbdurchlässigen Wanne aus rostfreiem Chrom-Nickel-Legierungstahl von 18/10 liegen, die gekühlt oder von aussen bis auf 100 °C aufgeheizt werden kann.

6. Verfahren nach Anspruch 1, bei welchem das flüssige Mittel aus der Gruppe der Alkohole; Kohlenwasserstoffe; organischen Lösungsmittel; Mischungen aus Kohlenwasserstoffen und organischen LÇösungesmitteln; Mischungen aus organischen Lösungsmitteln mit anorganischen Salzen; wässrig-organischen Mischungen; Dreistoffmischungen aus einem einzigen organischen Lösungsmittel, Wasser und einem anorganischen Salz; Lösungen bzw. wässrigen Saccharidsuspensionen mit einer Dichte zwischen 0,61 g/ml und 1,50 g/ml bei Raumtemperatur gewählt wird.

7. Verfahren nach Anspruch 1, bei welchem das flüssige Mittel ein hydroalkoholisches Mittel bestehend aus Wasser und einem Alkohol geringen Molgewichts in einer Konzentration von über 4 Vol-% ist.

8. Verfahren nach Anspruch 7, bei welchem der Alkohol geringen Molgewichts Ethanol ist.

9. Verfahren nach Anspruch 1, bei welchem das flüssige Mittel. in der Etappe e) durch Absetzung eines Teils des flüssigen Mittels und nachfolgender Verdunstung des restlichen Mittels, nach Wahl mit Hilfe einert Wärmequelle, extrahiert wird.

10. Verfahren nach Anspruch 1, bei welchem das flüssige Mittel in der Etappe e) durch Filterung extrahiert.

11. Produkt, das eine Suspension eines Edelmetalls in Form von Partikeln geringer Grösse enthält, **dadurch gekennzeichnet, dass** diese aus Edelmetallpartikeln mit einer Partikelfläche zwischen 0,00020 mm$^2$ und 0,6 mm$^2$ besteht, die nach dem Verfahren des ersten Anspruchs erhalten werden und in einem flüssigen Mittel mit einer Dichte zwischen 0,61 g/ml und 1,50 g/ml bei Raumtemperatur schweben.

12. Produkt nach Anspruch 11, bei welchem das Edelmetall unter Gold und Silber gewählt wird.

13. Produkt nach Anspruch 11, bei welchem das flüssige Mittel aus der Gruppe der Alkohole; Kohlenwasserstoffe; organischen Lösungsmittel; Mischungen aus Kohlenwasserstoffen und organischen Lösungsmitteln; Mischungen aus organischen Lösungsmitteln mit anorganischen Salzen; wässrig-organischen Mischungen; Dreistoffmischungen aus einem einzigen organischen Lösungsmittel, Wasser und einem anorganischen Salz; Lösungen bzw. wässrigen Saccharidsuspensionen mit einer Dichte zwischen 0,61 g/ml und 1,50 g/ml bei Raumtemperatur gewählt wird.

**EP 1 123 740 B1**

14. Produkt nach Anspruch 13, bei welchem das flüssige Mittel ein hydroalkoholisches Mittel bestehend aus Wasser und einem Alkohol geringen Molgewichts in einer Konzentration von über 4 Vol-% ist.

15. Produkt nach Anspruch 14, bei welchem der Alkohol geringen Molgewichts Ethanol ist.

16. Produkt nach Anspruch 11, bei welchem das flüssige Mittel unter Parfum, Essenzwn, Kölnisch Wasser, Schaumwein, Champagne, Likör, verzehrbarem Öl und Lack gewählt wird.

17. Produkt nach Anspruch 11, bei welchem sich diese im flüssigen Mittel schwebenden Edelmetallpartikel geringer Grösse auf dem Boden des die Suspension enthaltenden Behälters mit einer Geschwindigkeit von 0,5 cm/Sek. oder weniger absetzen.

18. Produkt nach Anspruch 11, das aus einem Parfum, Essenz, Kölnisch Wasser, Schaumwein, Champagne, Likör, verzehrbarem Öl oder Lack besteht, in dem diese kleinen Edelmetallpartikel schweben.


**Revendications**

1. Un procédé de fragmentation de métaux précieux dans un milieu liquide, qui comprend.

    a) l'introduction du métal précieux, sous forme de feuilles ou de disques, à l'intérieur d'un récipient pourvu de moyens de fragmentation ;
b) l'addition à ce récipient chargé du métal précieux d'un milieu liquide ayant une densité comprise entre 0,61 g/ml et 1,50 g/ml à température ambiante;
c) la fragmentation du métal précieux contenu à l'intérieur du récipient, en présence de ce milieu liquide jusqu'à obtenir la transformation du métal précieux en un produit constitué de particules de métal précieux de petite taille;
d) la sédimentation de ces particules jusqu'à ce qu'elles se déposent sur la partie inférieure du récipient;
e) l'extraction de ce milieu liquide, suite au repos du mélange formé par le métal précieux sous forme de particules de petite taille et le milieu liquide; et
f) le retrait du métal précieux transformé en fines particules, ayant une taille moyenne comprise entre 0,00020 mm$^2$ et 0,6 mm$^2$, entièrement sec.

2. Procédé selon la revendication 1, dans lequel ce métal noble est sélectionné parmi l'or, l'argent et leurs mélanges.

3. Procédé selon la revendication 2 dans lequel ce métal précieux est de l'or, sous forme de feuille d'or, de 14 à 24 carats, ayant une épaisseur moyenne comprise entre 0,051 et 0,103 mm et un poids par unité de surface compris entre 10 et 20 g/dm$^2$.

4. Procédé selon la revendication 1 dans lequel ces moyens de fragmentation sont formés d'un système de lames mues par un axe central de rotation et à mouvement vertical ascendant et descendant, raccordées à un moteur de commande fournissant la puissance nécessaire, avec réglage continu de la vitesse, plongées dans un bac étanche et semi-hermétique, doté en option de moyens de refroidissement ou de chauffage extérieur.

5. Procédé selon la revendication 4 dans lequel ces moyens de fragmentation sont constitués d'un système de lames ayant une forme hélicoïdale, fabriquées en acier inoxydable suivant un alliage chrome - nickel 18/10, mues par un axe central de rotation et à mouvement vertical ascendant - descendant, raccordées à un moteur de commande fournissant 0,6 kW, avec réglage continu de la vitesse de 100 à 12.000 t/mn, plongées dans un bac étanche et semi-hermétique en acier inoxydable selon un alliage chrome - nickel 18/10, avec possibilité de réfrigération ou de chauffage extérieur à une température allant jusque 100°C.

6. Procédé selon la revendication 1, dans lequel ce milieu liquide est sélectionné dans le groupe formé par les alcools ; les hydrocarbures ; les dissolvants organiques ; les mélanges d'hydrocarbures et de dissolvants organiques ; les mélanges de dissolvants organiques avec des sels inorganiques ; des mélanges aqueux organiques ; des mélanges ternaires constitués d'un dissolvant organique, d'eau et d'un sel inorganique ; des solutions ou des suspensions aqueuses de saccharides ; ayant une densité comprise entre 0,61 g/ml et 1,50 g/ml à température ambiante.

7. Procédé selon la revendication 1 dans lequel ce milieu liquide est constitué d'un milieu hydro-alcoolique composé d'eau et d'un alcool à faible poids moléculaire, suivant une concentration supérieure à 4 % en volume d'alcool.

8. Procédé selon la revendication 7 dans lequel cet alcool à faible poids moléculaire est de l'éthanol.

9. Procédé selon la revendication 1 dans lequel dans l'étape e), l'extraction de ce milieu liquide est réalisée par l'intermédiaire du retrait d'une partie de ce milieu liquide par décantation, suivi d'une évaporation du reste de ce milieu liquide, en option avec la collaboration d'une source de chaleur.

10. Procédé selon la revendication 1, dans lequel dans l'étape e), le retrait de ce milieu liquide est réalisé par filtration.

11. Un produit qui comprend une suspension d'un métal précieux sous forme de particules de petite taille, **caractérisé en ce qu'**il est constitué de particules de métal précieux dont la surface de particule est comprise entre 0,00020 $mm^2$ et 0,6 $mm^2$, que l'on peut obtenir par l'intermédiaire du procédé de la revendication 1, en suspension dans un milieu liquide ayant une densité comprise entre 0,61 g/ml et 1,50 g/ml à température ambiante.

12. Produit selon la revendication 11 dans lequel ce métal précieux est sélectionné parmi l'or et l'argent.

13. Produit selon la revendication 11, dans lequel ce milieu liquide est sélectionné dans le groupe formé par les alcools ; les hydrocarbures ; les dissolvants organiques ; des mélanges d'hydrocarbures et de dissolvants organiques ; des mélanges de dissolvants organiques avec des sels inorganiques; des mélanges aqueux organiques ; des mélanges ternaires constitués d'un dissolvant organique, d'eau et d'un sel inorganique ; des solutions ou suspensions aqueuses d'un sel inorganique ; et des solutions ou suspensions aqueuses de saccharides ; ayant une densité comprise entre 0,61 g/ml et 1,50 g/ml à température ambiante.

14. Produit selon la revendication 13 dans lequel ce milieu liquide est constitué d'un milieu hydro-alcoolique composé d'eau et d'un alcool à faible poids moléculaire, suivant une concentration supérieure à 4 % en volume d'alcool.

15. Produit selon la revendication 14 dans lequel cet alcool à faible poids moléculaire est de l'éthanol.

16. Produit selon la revendication 11, dans lequel ce milieu liquide est sélectionné parmi un parfum, une essence, une eau de Cologne, un cava, un champagne, une liqueur, une huile ménagère et une peinture.

17. Produit selon la revendication 11 dans lequel ces particules de métal précieux, de petite taille, en suspension dans ce milieu liquide, se déposent au fond du récipient où se trouve cette suspension à une vitesse inférieure ou égale à 0,5 cm/s.

18. Produit selon la revendication 11, qui consiste en un parfum, une essence, une eau de Cologne, un cava, un champagne, une liqueur, une huile ménagère ou une peinture qui comprend ces particules de métal précieux, de petite taille, en suspension.